# EUROPEAN PATENT SPECIFICATION

(11) **EP 1 970 135 B1**
(45) Date of publication and mention of the grant of the patent: **17.07.2013**
(21) Application number: 06834398.7
(22) Date of filing: 11.12.2006
(51) Int. Cl.: B09B 5/00, B03D 1/02, B09B 3/00

(54) **METHOD FOR REMOVAL OF UNBURNED CARBON CONTAINED FLY ASH**
VERFAHREN ZUM ENTFERNEN VON UNVERBRANNTEN KOHLENSTOFF ENTHALTENER FLUGASCHE
PROCÉDÉ D'EXTRACTION DE CHARBON NON BRÛLÉ CONTENU DANS DES CENDRES VOLANTES

(30) Priority: 26.12.2005 JP 2005373020
(43) Date of publication of application: 17.09.2008
(73) Proprietor: Mitsui Engineering and Shipbuilding Co, Ltd., Tokyo 104-8439 (JP); TAIHEIYO CEMENT CORPORATION, Tokyo 135-8578 (JP)
(72) Inventor: MATSUO, Kazuyoshi, Ichihara-shi, Chiba 290-8601 (JP); ABE, Kazuo, Tokyo 104-8439 (JP); SUZUKI, Takao, Tokyo 104-8439 (JP); SAITO, Shinichiro, Kumagaya-shi, Saitama 360-0843 (JP)
(74) Representative: Köppen, Manfred
(86) International application number: PCT/JP2006/324643
(87) International publication number: WO 2007/074627

(56) References cited:
- EP-A1- 0 060 313
- WO-A1-2005/035134
- JP-A- 05 038 468
- JP-A- 08 057 351
- JP-A- 54 089 902
- JP-A- 58 104 652
- JP-A- 59 127 660
- JP-A- 2003 266 057
- US-A- 5 116 487

## Description

### FIELD OF THE INVENTION

The present invention relates to a method of removing unburned carbon from fly ash, and in particular to a method of more efficiently removing unburned carbon from the fly ash which is generated in a coal fired power plant.

### DESCRIPTION OF THE RELATED ART

Fly ash (FA) generated in a coal fired power plant has been used as a raw material for cement and artificial lightweight aggregate or cement admixtures.

However, because the unburned carbon contained in fly ash absorbs AE agent or water reducing agents, etc., when fly ash is used as a cement admixture, it is necessary to supply an extra amount of the AE agent or the water reducing agent, etc. after taking into consideration the absorption amount, and this is uneconomical. Furthermore, because unburned carbon has the water, repellency, it has a negative effect in that the unburned carbon separates from the concrete and floats to the top, and darker areas due to the unburned carbon are generated in the concrete-jointed portions. Also, in the case where large amounts of unburned carbon included in the fly ash are present, there is the problem that the quality of the artificial lightweight aggregate decreases because the bonding strength between the fly ash particles has decreased.

For this reason, only good quality fly ash with relatively small amounts of unburned carbon is used as a cement admixture, etc. and fly ash with a large amount of unburned carbon is used as a raw material for cement or is reclaimed as industrial waste.

However, because of a shortage of reclaimed land every year, a method for removing the unburned carbon from fly ash used as a raw material has been proposed. For example, in the specification of Japanese Patent No. 3613347, a method for removing the unburned carbon from fly ash is proposed in which flotation is performed by making the fly ash into a slurry by adding water; adding a collector such as kerosene to this slurry-state fly ash; stirring the slurry in which the collector was added with a high speed shear mixer; lipophilizing the surface of the unburned carbon included in the fly ash, and at the same time, attaching the unburned carbon of which the surface was lipophilized to the collector; generating air bubbles by adding a frother; and attaching the unburned carbon to the surface of the air bubbles through the collector.

However, because the flotation is performed in the conventional method of first adding the oil that is the collector (for example, kerosene) to the fly ash made into a slurry; stirring the slurry in which the collector was added with a high speed shear mixer; activating and lipophilizing the surface of the unburned carbon included in the fly ash, and at the same time, attaching the unburned carbon of which the surface was activated and lipophilized to the collector; furthermore, generating air bubbles by adding a foaming agent; and attaching the activated unburned carbon to the surface of the air bubbles through the collector, not only the part of the oil which is the collector attaches to the surface of the unburned carbon included in the fly ash, but also a part of the oil attaches to the surface of the activated ash content when it is stirred with a high speed shear mixer. For this reason, there is a problem in that the necessary amount of the oil which is the collector, to be added increases

Furthermore, in the flotation step, because the ash content to which the oil content is attached also easily attaches to the air bubbles, a part of the ash content is also recovered as froth (unburned carbon) along with the unburned carbon. Therefore, the problem exists that the recovery rate of the ash content in the tail side decreases. Furthermore, because the oil of the collector does not attach selectively to the unburned carbon, the amount of collector becomes insufficient and there is a tendency for the amount of unburned carbon in the tail side to become high.

### SUMMARY OF THE INVENTION

The present invention aims at solving such problems, and the objective is to provide a method for removing the unburned carbon in fly ash in which the recovery rate of the ash content is improved upon, the added amount of oil used as the collector is reduced, and the amount of unburned carbon in the tail side can be decreased when the unburned carbon in the fly ash is removed through using a flotation method which utilizes surface lipophilization (surface modification).

In order to solve the above-described problems, the present invention is constructed as follows.

The invention described in Claim 1 is a method of removing unburned carbon from fly ash of a raw material consisting of several steps: making the fly ash into a slurry by adding water; shearing the fly ash made into a slurry with a stirring blade rotating at high speed and adding lipophilicity by generating activation energy to the surface of the unburned carbon with the shearing force; and performing flotation by attaching the unburned carbon attached to the collector to the air bubbles together while attaching the collector to the lipophiliced unburned carbon by adding the collector and the frother to the slurry including the lipophiliced unburned carbon.

The invention described in Claim 2 is a method for removing unburned carbon in fly ash as in Claim 1 in which the concentration of the fly ash in the slurry is 5 to 40 wt% when the fly ash is made into slurry by adding water.

The invention described in Claim 3 is a method for removing unburned carbon in fly ash as in Claim 1 in which the stirring force is 10 to 100 kWh/m³ per unit of slurry when the shear force is applied to the fly ash that is made into slurry.

The invention described in Claim 4 is a method for removing unburned carbon in fly ash as in Claim 1 in which the residence time of the slurry is 0.1 to 10 minutes when the shear force is added to the fly ash that is made into slurry.

The invention described in Claim 5 is a method for removing unburned carbon in fly ash as in Claim 1 in which the added amount of collector is 0 to 3.0 wt% to the fly ash when the collector is added to the slurry including the unburned carbon that has been lipophiliced by the activation energy.

The invention described in Claim 6 is a method for removing unburned carbon in fly ash as in Claim 1 in which the added amount of frother is 20 to 5,000 ppm when the frother is added to the slurry including the unburned carbon that has been lipophiliced by the activation energy.

According to the present invention, because the fly ash is made into a slurry by adding water and then applying a shearing force to it using a high speed shear mixer for example, excessive activation energy (surface energy) is generated on the surface of the unburned carbon included in the fly ash and the surface is lipophiliced (hydrophobiced) at a higher rate.

Because the fly ash generated in a coal burning thermal electric power plant is generally combustion ash generated by combusting pulverized coal at high temperature (for example, 1200 to 1500°C), the surface of the unburned carbon included in it is in an oxidized state and the original lipophilicity is lost. However, the lipophilicity (hydrophobicity) can be recovered by applying a high shearing force during the slurry stage..

After that, when the collector and the frother are added to the slurry including the unburned carbon that has been lipophiliced by the activation energy, the surface of the lipophiliced unburned carbon is brought into close contact with the surface of particles in the collector (oil), and the surface energy decreases. On the one hand, the surface energy decreases as the surface of the activated fly ash adapts to water and disperses in water, and the hydrophilicity increases even more. As a result, the fly ash disperses into water and separates from the unburned carbon in the latter part of the flotation step. On the other hand, because air bubbles are generated by the frother, the unburned carbon separated from the fly ash attaches to the surface of the air bubbles and floats..

Therefore, according to the present invention, the collector is attached to the unburned carbon of which the surface is lipophiliced by activation by the surface modification. However, because the collector does not attach to the hydrophiliced fly ash, the added amount (the used amount) of the collector (oil) can be reduced compared to the amount in the conventional method. Furthermore, because there is no attachment of the collector to the surface of the fly ash, the recovery rate of the fly ash becomes high and the amount of the unburned carbon in the recovered fly ash becomes small.

### BRIEF DESCRIPTION OF THE DRAWINGS

Figure 1 shows a system block diagram to carry out the method for removing the unburned carbon in the fly ash in the present invention.
Figure 2 shows a configuration diagram of an apparatus to carry out the method for removing the unburned carbon in the fly ash in the present invention.
Figure 3 shows a side view including a part of the cross-section of a high speed shear mixer.
Figure 4 shows a sectional view of one example of a flotation unit.
Figure 5 shows a plan view of one example of a flotation unit.
Figure 6 shows a sectional view of one example of a stirring machine.
Figure 7 (a) is a state view showing when it is slurry, Figure 7 (b) is a state view showing when surface upgrading is performed, Figure 7 (c) is a state view showing when the collector is added, and Figure 7 (d) is a state view showing when flotation is performed.

### DETAILED DESCRIPTION OF THE INVENTION

The embodiments of the present invention are explained using figures below.

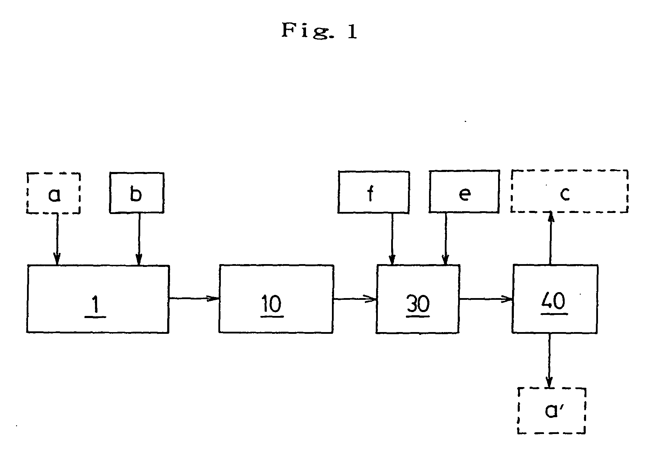

As shown in Figure 1, the system to carry out the method for removing the unburned carbon in fly ash in the present invention is mainly configured with a slurry adjusting tank 1 in which fly ash a of a raw material is made into a slurry by adding water b, a surface upgrading machine (for example, a high speed shear mixer 10) performing surface upgrading of the fly ash made into a slurry, an adjusting tank 30 in which a collector e and a frother f are added to the slurry after surface upgrading, a flotation unit 40 in which the slurry after the collector and the frother are added is stirred and the unburned carbon is floated together with air bubbles, etc.

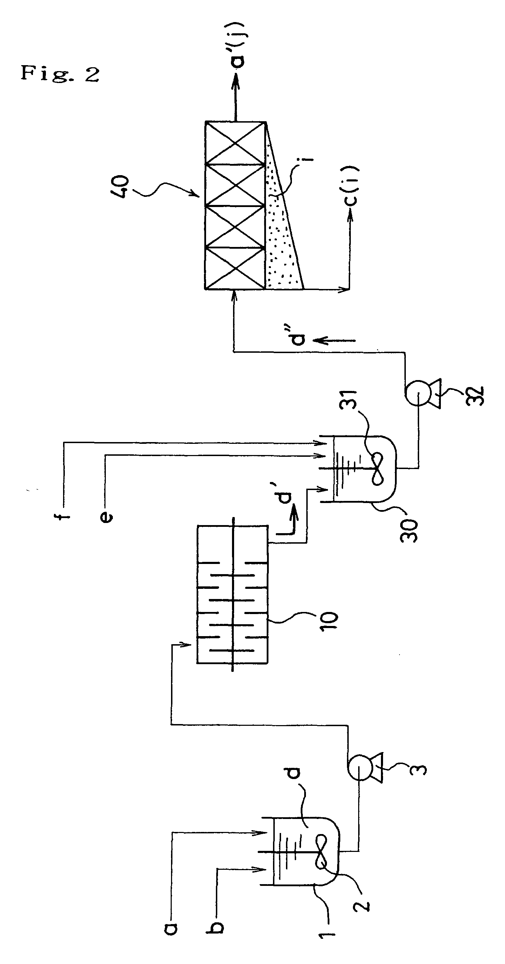

As shown in Figure 2, the slurry adjusting tank 1 is provided to produce a slurry d with the fly ash a and the water b and is equipped with a stirring blade 2 to stir the slurry d inside. The front part of this slurry adjusting tank 1 is provided with a fly ash tank and a water supplying facility, and the back part has a pump 3 to supply the slurry d to a high speed shear mixer 10 which is a surface upgrading apparatus.

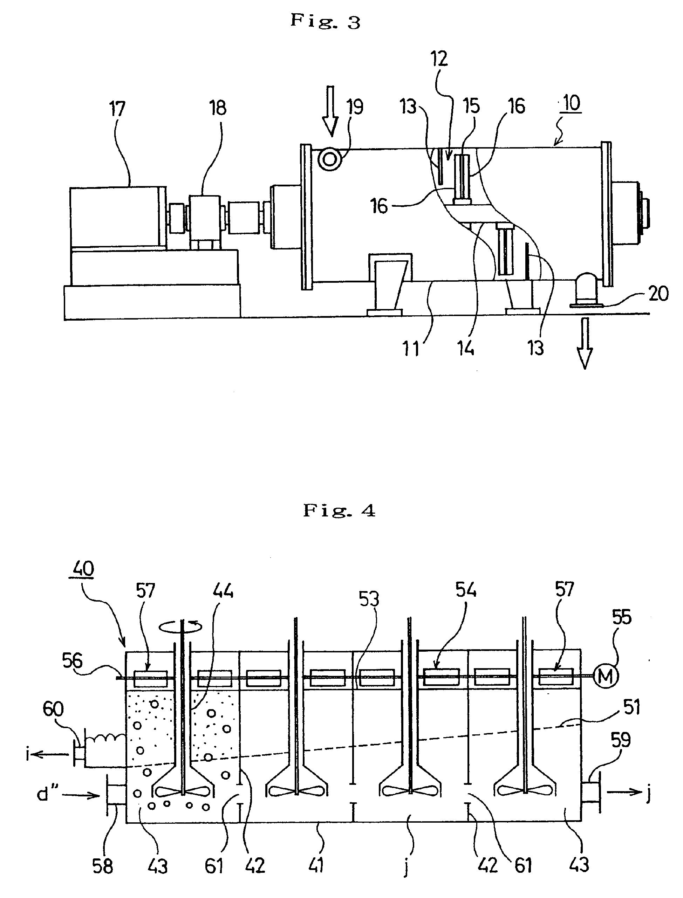

The high speed shear mixer 10 is provided to modify the surface of the unburned carbon by adding a shearing force (grazing force) to the fly ash that is made into slurry. This high speed shear mixer 10 is, as shown in Figure 3, equipped with a lateral type cylindrically-shaped main body 11, a plurality of annular partitioning walls 13 partitioning the main body 11 into a plurality of rooms 12 in its axial direction, a rotary shaft 14 passing through the main body 11, a disc 15 provided in the rotary shaft 14, and a plurality of stirring blades 16 provided radially on both sides of the disc 15, and the rotary shaft 14 and the stirring blades 16 are made to rotate by a motor 17 and a speed reducer 18.

In the adjusting tank 30, a small amount of the collector e such as kerosene, gas oil, and heavy oil and the frother f such as MIBC (methylisobutylcarbinol) is added to the slurry which is made from the high speed shear mixer 10 and mixed, and as shown in Figure 2, the adjusting tank 30 is equipped with a stirring blade 31 for stirring at low speed inside. In the latter part of this adjusting tank 30, a pump 32 is arranged to supply the slurry d to the flotation unit 40.

In the flotation unit 40, the unburned carbon is floated by attaching to the generated air bubbles, and the slurry d is separated into unburned carbon c and an ash content in which the unburned carbon is removed a'. This flotation unit 40 has a structure shown in Figures 4 to 6, for example. However, other structures (for example, a column flotation) can be used.

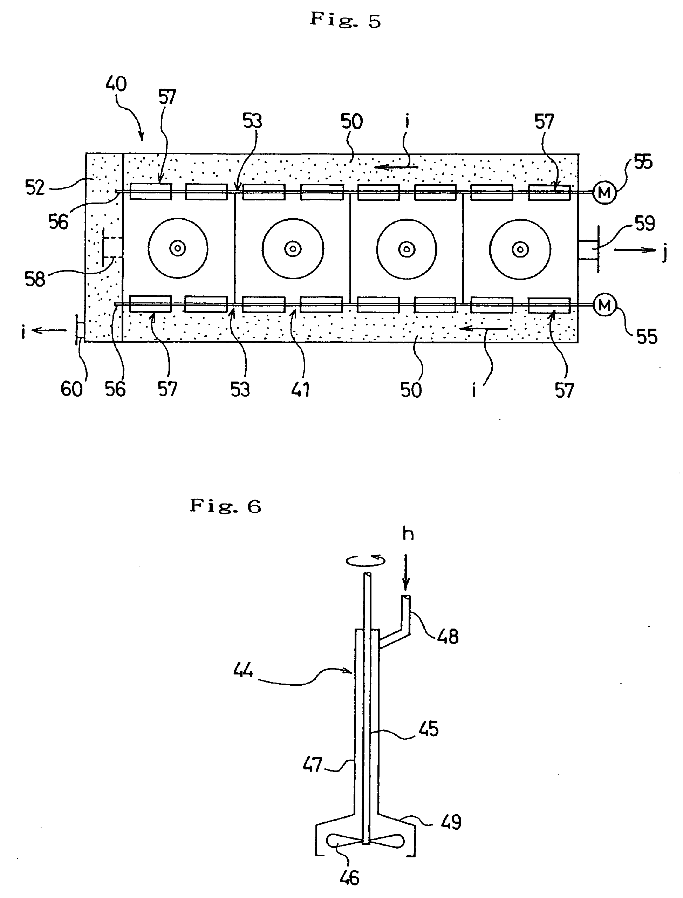

This flotation unit 40 has a plurality of rooms 43 partitioned into partitions 42 in a rectangular tank 41 and is equipped with a stirring machine 44 in each of the rooms 43. This stirring machine 44 has an external pipe 47 outside of a lateral rotary shaft 45. This external pipe 47, as shown in Figure 6, has an air introducing pipe 48 in the upper part and has a hood 49 to cover a stirring blade 46 in the lower part.

Further, this flotation unit 40 has froth-discharge paths 50 in both sides of the tank 41. This froth-discharge path 50 has an inclined bottom part 51 and a froth gathering path 52 connecting to both of the froth-discharge paths 50 in the valley side. Further, this flotation unit 40 is provided with a froth rake-out machine 54 in the upper part of the side wall (may be referred to as a weir) 53 having the froth-discharge path 50. This froth rake-out machine 54 is configured with a rotary shaft 56 rotated by a motor 55 and a plurality of water wheels 57 provided in this rotary shaft 56.

Further, this flotation unit 40 has a slurry input port 58 on an end face of the upstream side, a tail output port 59 on an end face of the downstream side, and a froth output port 60 in the froth gathering path 52. Further, it has a communication port 61 in each partition 42.

Next, operation of the above-described system is explained by referring to Figures 2 to 7.

As shown in Figure 2, the fly ash a is supplied to the slurry adjusting tank 1 and becomes the slurry d by mixing with the water b. Here, the fly ash concentration in the slurry is adjusted to the range of 5 to 40 wt%, and preferably to the range of 15 to 25 wt%. When the fly ash concentration in the slurry is less than 5 wt%, it is not profitable to industrialize it because the fly ash content is too low. On the other hand, when it exceeds 40 wt%, the slurry concentration becomes high and difficulty occurs in the later steps.

The slurry d in the slurry adjusting tank 1 is supplied to the high speed shear mixer 10 by the pump 3 and the application of the shearing force is performed by the high speed shear mixer 10. The addition of the shear force can be performed using the high speed shear mixer 10 in Figure 3 for example. A shearing force is applied by the stirring blade 16 rotating at high speed in each room 12 partitioned with a partitioning wall 13, and the slurry d supplied from an input port 19 of the high speed shear mixer 10 is activated. At that time, short passing of the slurry d is prevented by the annular partitioning wall 13 and the shearing force can be applied to the slurry with certainty. The slurry d to which the shearing force is applied, and activated, is discharged from an exit 20 and is supplied to the adjusting tank 30.

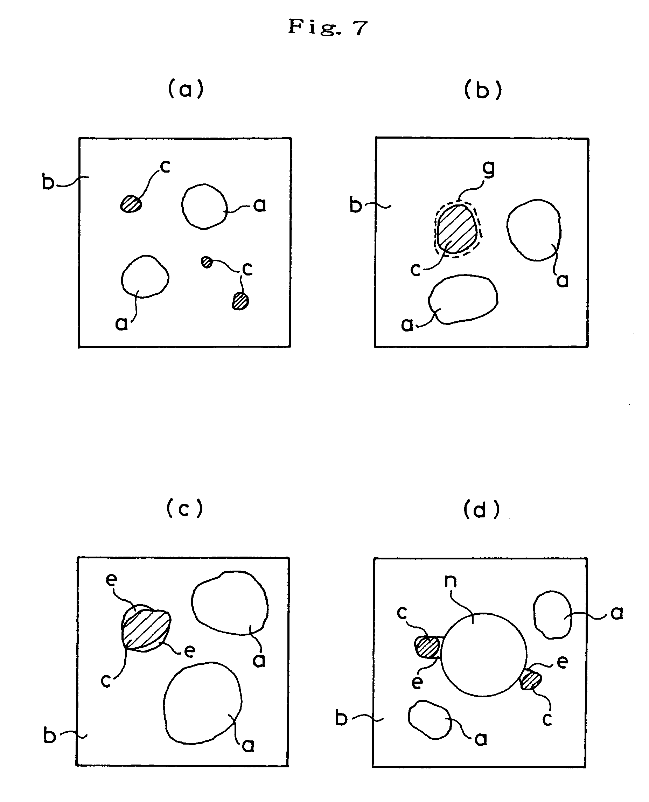

As described above, the purpose of applying the shearing force to the slurry of the fly ash and activating it is to improve the floating property of the unburned carbon by performing surface modification. This is explained by referring to Figures 7(a) to 7(d).

The slurry d including the fly ash is, as shown in Figure 7(a), only in the state where the fly ash a and the unburned carbon c are mixed individually in the water b. However, when the shearing force is applied to the slurry d and the surface upgrading of the unburned carbon c is performed, as shown in Figure 7(a), excessive activation energy (surface energy) is generated on the surface of the unburned carbon c, and its surface is lipophiliced (hydrophobiced) even more. On the other hand, the surface of the fly ash a is hydrophiliced more and becomes adaptable to water.

When the collector e and the frother f are added to the slurry after the surface upgrading of the unburned carbon c is performed, as shown in Figure 7(c), the collector e attaches to the unburned carbon c. Then, when the flotation is performed using the flotation unit, as shown in Figure 7(d), the unburned carbon c to which the collector e is attached floats by attaching to air bubbles n.

Moreover, when the shearing force is applied to the slurry by the high speed shear mixer 10, a stirring force (stirring force) of 10 to 100 kWh/m³ per unit slurry amount of the slurry, preferably 30 to 50 kWh/m³ is applied. When the stirring force per unit slurry amount is less than 10 kWh/m³, the surface upgrading of the unburned carbon is insufficient, and when the stirring force per unit slurry amount exceeds 100 kWh/m³, there are problems such as an increase in running cost and wear and tear of the surface upgrading machine.

Further, the residence time of the slurry in the high speed shear mixer 10 is 0.1 to 10 minutes and preferably should be 0.5 to 5 minutes. When the residence time of the slurry is less than 0.1 minute, the surface upgrading of the unburned carbon is insufficient, and when it exceeds 10 minutes, there are problems such as increases in equipment cost and running cost of the surface upgrading machine.

The slurry d' in which the shearing force is applied by the high speed shear mixer 10 and is activated, is supplied to the adjusting tank 30, and in the adjusting tank 30, the collector e (for example, kerosene, gas oil, and heavy oil) and the frother f (for example, MIBC (methylisobutylcarbinol)) are added to the slurry d' after the surface upgrading. When the slurry is stirred at low speed with the stirring blade 31 while the collector e and the frother f are added to the slurry including the lipophiliced unburned carbon, the surface of the unburned carbon c lipophiliced by the activation energy is brought into close contact with the surface of the particles of the collector (refer to Figure 7(c)), and the surface energy decreases. On the other hand, because the surface of the activated fly ash a adapts to water and disperses into water, the surface energy decreases.

Here, the added amount of the collector is 0 to 3.0 wt% and preferably should be 0.05 to 1.0 wt%. Further, the added amount of the frother is 20 to 5,000 ppm and preferably should be 100 to 1000 ppm. When the added amount of the collector exceeds 3.0 wt%, the added amount of the collector becomes excessive and uneconomical.

In the case that the added amount of the frother is less than 20 ppm, the added amount of the frother is insufficient and it becomes difficult to generate air bubbles sufficiently. And, when the added amount of the frother exceeds 5,000 ppm, there is the problem that the recovery rate of the fly ash decreases because fly ash is absorbed into the air bubbles.

Next, the slurry d" that has been stirred and adjusted in the adjusting tank 30 is supplied to the flotation unit 40 by the pump 3. The slurry d' supplied to the flotation unit 40 is stirred with the stirring machine 44. However, air h is sucked in from the air introducing pipe 48 when the stirring machine 44 rotates and the air bubbles n are generated. At that time, it is possible that air may be blown in involuntarily. For example, there is a method in which the air introducing pipe is provided and in which air is supplied from a blower, etc. When the air bubbles are generated, as shown in Figure 7(d), the unburned carbon c is attached to the surface of the air bubbles n through the collector e and floats together with the air bubbles n. The unburned carbon floated together with the air bubbles n is raked out to the outside of the tank by the froth rake-out machine 54 provided on the upper end of the side wall (weir) 53 and flows down to the froth-discharge path 50.

The froth (unburned carbon) i in the froth-discharge path 50 flows along the inclined bottom part 51 and is discharged to the outside of the machine through the froth gathering path 52. Meanwhile, the tail (fly ash) j remaining in the tank 41 is discharged to the outside of the machine from the output port 59 together with water.

In the above explanation, the method whereby the surface of the unburned carbon is modified by the shearing force of the high speed shear mixer is explained. However, the surface of the unburned carbon may be modified by the shearing force using a machine such as an ejector. Any machine may be used essentially as long as it can modify the surface of the unburned carbon by applying a shearing force to the slurry-state unburned carbon.

### EMBODIMENTS

### (Embodiment 1)

1000 ml of water and 200 g of fly ash (unburned carbon content, 5.0%) were mixed while being stirred, and were made into slurry. By stirring this slurry at high speed with a high speed shear mixer (high speed shear mixer power: 40 kWh/m³), a shearing force was applied to the slurry, the slurry was activated, and the unburned carbon in the fly ash was lipophiliced (hydrophobiced).

While the slurry that has been lipophiliced by the activation energy was stirred at low speed, 1.3 ml of kerosene as a collector was added and 200 mg of MIBC (methylisobutylcarbinol) as a frother was added. Next, air bubbles were generated by a flotation operation, the unburned carbon was floated by being attached to the generated air bubbles, and the floated air bubbles were taken out as froth. This flotation step was performed continuously for 5 minutes.

Next, when the tail remaining in the container was dried and weighed, it was 165 g, and the amount of the unburned carbon in it was 0.4 wt%. As a result, it was found that the recovery rate of the fly ash was 86.5 wt% (= (165 x 0.996/200 x 0.95) x 100).

By contrast, in the case when the same amount of kerosene as a collector was added to the slurry before the shearing force was applied with the mixer, as in the conventional method, the recovery rate of the fly ash was 76.5 wt%. Further, the amount of unburned carbon in the recovered fly ash was 1.1 wt%, and it resulted in the amount of the collector being insufficient.

### INDUSTRIAL APPLICABILITY

For example, the present invention could possibly be used in removing the unburned carbon effectively from the fly ash generated in a coal burning thermal electric power plant, etc.

## Claims

1. A method for removing unburned carbon in fly ash of raw material comprising steps of;
slurring by adding water to the fly ash;
shearing the fly ash made into slurry with a stirring blade rotating at high speed and applying lipophilicity to the unburned carbon by generating activation energy on the surface of the unburned carbon by the shearing force; and
performing flotation by attaching the unburned carbon attached to a collector to air bubbles together while attaching the collector to the lipophiliced unburned carbon by adding the collector and the frother to the slurry including the lipophiliced unburned carbon.

2. The method for removing unburned carbon in fly ash as in Claim 1, wherein a concentration of the fly ash in the slurry is 5 to 40 wt% when the fly ash is made into the slurry by adding water.

3. The method for removing unburned carbon in fly ash as in Claim 1, wherein the stirring force is 10 to 100 kWh/ m³ per unit slurry amount of the slurry when the shear force is applied to the fly ash that has been made into slurry.

4. The method for removing unburned carbon in fly ash as in Claim 1, wherein a residence time of the slurry is 0.1 to 10 minutes when the shear force is added to the fly ash that has been made into slurry.

5. The method for removing unburned carbon in fly ash as in Claim 1, wherein the added amount of the collector is in 0 to 3.0 wt% to the fly ash when the collector is added to the slurry including the lipophiliced unburned carbon by the activation energy.

6. The method for removing unburned carbon in fly ash as in Claim 1, wherein the added amount of the frother is in 20 to 5,000 ppm when the frother is added to the slurry including the unburned carbon that has been lipophiliced by the activation energy.

## Patentansprüche

1. Verfahren zum Entfernen von unverbranntem Kohlenstoff in Flugasche eines Rohmaterials, welches die folgenden Schritte aufweist:
Aufschlämmen durch Hinzugabe von Wasser zu der Flugasche,
Scheren der zu einer Aufschlämmung gemachten Flugasche durch ein Rührblatt, das sich mit Hochgeschwindigkeit dreht, und Ausüben von Lipophilie auf den unverbrannten Kohlenstoff durch Erzeugen von Aktivierungsenergie auf die Oberfläche des unverbrannten Kohlenstoffes durch die Scherkraft, und
Ausführen von Flotation durch Anheften des unverbrannten Kohlenstoffes, der an einem Sammler angeheftet ist, an Luftblasen, während der Sammler an den lipophilen unverbrannten Kohlenstoff angeheftet wird, indem der Sammler und der Aufschäumer zu der Aufschlämmung hinzugegeben werden, die den lipophilisierten unverbrannten Kohlenstoff umfasst.

2. Verfahren zum Entfernen von unverbranntem Kohlenstoff in Flugasche nach Anspruch 1, wobei eine Konzentration der Flugasche in der Aufschlämmung 5 bis 40 Gew.-% beträgt, wenn die Flugasche zu der Aufschlämmung durch Zugabe von Wasser gemacht wird.

3. Verfahren zum Entfernen von unverbranntem Kohlenstoff in Flugasche nach Anspruch 1, wobei die Rührkraft 10 bis 100 kWh/m³ pro Einheit Aufschlämmungsmenge der Aufschlämmung beträgt, wenn die Scherkraft auf die Flugasche, die zu einer Aufschlämmung gemacht wurde, ausgeübt wird.

4. Verfahren zum Entfernen von unverbranntem Kohlenstoff in Flugasche nach Anspruch 1, wobei eine Verweilzeit der Aufschlämmung 0,1 bis 10 Minuten ist, wenn die Scherkraft auf die Flugasche, die zu einer Aufschlämmung gemacht wurde, ausgeübt wird.

5. Verfahren zum Entfernen von unverbranntem Kohlenstoff in Flugasche nach Anspruch 1, wobei die zugegebene Menge des Sammlers zu der Flugasche 0 bis 3,0 Gew.-% beträgt, wenn der Sammler zu der Aufschlämmung hinzugegeben wird, die den durch Aktivierungsenergie lipophilisierten unverbrannten Kohlenstoff umfasst.

6. Verfahren zum Entfernen von unverbranntem Kohlenstoff in Flugasche nach Anspruch 1, wobei die zugegebene Menge des Aufschäumers 20 bis 5000 ppm beträgt, wenn der Aufschäumer in die Aufschlämmung gegeben wird, die den unverbrannten Kohlenstoff umfasst, der durch die Aktivierungsenergie lipophilisiert wurde.

## Revendications

1. Un procédé destiné à retirer du carbone non brûlé dans de la cendre volante de matière brute comprenant les étapes consistant à :
faire une bouillie en ajoutant de l'eau à la cendre volante ;
cisailler la cendre volante mise en bouillie avec une lame d'agitation tournant à une vitesse élevée et appliquer une lipophilie au carbone non brûlé en générant une énergie d'activation sur la surface du carbone non brûlé par la force de cisaillement ; et
effectuer une flottation en attachant le carbone non brûlé attaché à un collecteur à des bulles d'air ensemble tout en attachant le collecteur au carbone non brûlé lipophilé en ajoutant le collecteur et le moussant à la bouillie incluant le carbone non brûlé lipophilé.

2. Le procédé destiné à retirer du carbone non brûlé dans de la cendre volante tel que dans la revendication 1, dans lequel une concentration de la cendre volante dans la bouillie va de 5 à 40 % en poids lorsque la cendre volante est mise en bouillie en ajoutant de l'eau.

3. Le procédé destiné à retirer du carbone non brûlé dans de la cendre volante tel que dans la revendication 1, dans lequel la force d'agitation va de 10 à 100 kWh/m³ par unité de quantité de bouillie de la bouillie lorsque la force de cisaillement est appliquée sur la cendre volante qui a été mise en bouillie.

4. Le procédé destiné à retirer du carbone non brûlé dans de la cendre volante tel que dans la revendication 1, dans lequel un temps de résidence de la bouillie va de 0,1 à 10 minutes lorsque la force de cisaillement est ajoutée à la cendre volante qui a été mise en bouillie.

5. Le procédé destiné à retirer du carbone non brûlé dans de la cendre volante tel que dans la revendication 1, dans lequel la quantité ajoutée du collecteur est comprise entre 0 et 3,0 % en poids par rapport à la cendre volante lorsque le collecteur est ajouté à la bouillie incluant le carbone non brûlé lipophilé par l'énergie d'activation.

6. Le procédé destiné à retirer du carbone non brûlé dans de la cendre volante tel que dans la revendication 1, dans lequel la quantité ajoutée du moussant est comprise entre 20 et 5 000 ppm lorsque le moussant est ajouté à la bouillie incluant le carbone non brûlé qui a été lipophilé par l'énergie d'activation.
